# EUROPEAN PATENT APPLICATION

(11) **EP 2 878 367 A1**
(43) Date of publication of application: **03.06.2015**
(21) Application number: 13195223.6
(22) Date of filing: 02.12.2013
(51) Int. Cl.: B01J 21/06, B01J 21/08, B01J 23/22, B01J 23/30, B01J 23/652, B01J 23/648, B01J 35/04, B01J 35/06, B01J 35/02, B01J 37/02, B01D 53/86

(54) **Catalyst for the oxidation of sulfur compounds**

(71) Applicant: Haldor Topsøe A/S, 2800 Kgs. Lyngby (DK)
(72) Inventor: SCHOUBYE, Peter, 2970 Hørsholm (DK); THØGERSEN, Joakim Reimer, 2830 Vlrum (DK)
(74) Representative: Haldor Topsøe A/S

(57) **Abstract**

In a broad form the present invention relates to a material catalytically active in the oxidation of species comprising sulfur in an oxidation state below +4, such as H₂S, CS₂, COS and S₈ vapor, to SO₂ comprising from 1 to 25 wt% or 50 wt% V₂O₅ and a 10-80wt% of a porous supportwith the associated benefit of said material being catalytically active at low temperatures, and a process for oxidation of such species at a temperature between 180 and 450°C.

## Description

The invention relates to materials catalytically active in the oxidation of sulfur compounds, more specifically the oxidation of elemental sulfur, H₂S, CS₂, COS, and CO at low temperatures.

H₂S is a common component in off gases from a high number of industries including refineries and viscose fiber production. H₂S may commonly be present together with CS₂, COS and CO especially in waste gases from viscose production. A common method for abatement of sulfides has been the elimination by thermal incineration and by catalytic oxidation involving the following chemical reactions.

1) H₂S + 1.5 O₂ → SO₂ + H₂O

2) CS₂ + 1.5 O₂ → COS + SO₂

3) COS + 1.0 O₂ → SO₂ + CO

4) CO + 0.5 O₂ → CO₂

The thermal incineration is costly, as it requires the addition of a support fuel and incineration at temperatures above 850°C, whereas catalytic oxidation according to the prior art has been in the presence of a material comprising a noble metal typically with the oxidation of H₂S taking place at a temperature above 280°C, and the oxidation of CO in the presence of sulfur requiring even higher temperatures up to 420°C. Catalytic oxidation may thus also require support firing.

According to the present disclosure a material catalytically active in the oxidation of hydrogen sulfide at a temperature as low as 200°C is provided together with a further variant of said material additionally active in the oxidation of carbon monoxide and carbonyls at temperatures down to 320°C with the effect of reducing the amount of support fuel required for catalytic oxidation.

The catalytically active materials are based on vanadium and tungsten on a porous support; and in the variant active in carbon monoxide oxidation additionally comprises a noble metal. The material may beneficially be provided on a monolithic substrate with a porous washcoat.

### Definitions

The term catalytically active material shall herein be understood a material having the ability to reduce the activation energy of a reaction, compared to the gas phase reaction. Catalytically active material shall not be construed as having a specific physical structure, but rather than that understood as having a capability in a chemical reaction.

A catalytically active material typically consists of an active constituent, which is providing the chemical interaction with the reactants, and a porous support which has the primary function of distributing the active constituent over a high area and typically in many individual clusters. In addition a structural support may also be present with the main function of providing a defined structure with physical stability to the catalytically active material. Furthermore, additional constituents such as stabilizers reducing the sintering or similar deactivation of crystals structures and/or particles of active constituents and further active constituents may be present in the catalytically active material.

A monolithic catalytically active material or a catalyst monolith is a specific physical configuration of a catalyst, in which a structural substrate (with little or no contact with the reacting gas) is covered by a porous support, on which the active material is deposited.

Where concentrations are stated in % or vol% this shall be understood as volumetric % (i.e. molar percentages for gases).

Where concentrations are stated in ppm this shall be understood as volumetric parts per million (i.e. molar ppm for gases).

For a structural catalyst the void vol% corresponds to the relative volume accessible by air.

Where concentrations are stated in wt% this shall be understood as weight/weight %.

In a broad form the present invention relates to a material catalytically active in the oxidation of a species comprising sulfur in an oxidation state below +4, such as H₂S, CS₂, COS and S₈ vapor, to SO₂ comprising from 1 to 25 wt% or 50 wt% V₂O₅ and a 10-80wt% of a porous support with the associated benefit of said material being catalytically active at low temperatures.

In a further embodiment the catalytically active material comprises from 2 wt% or 3 wt% to 4wt%, 5wt% or 10wt% V₂O₅with the associated benefit of balancing low cost at low concentrations and high activity at low temperatures at higher concentrations.

In a further embodiment the catalytically active material comprises TiO₂ preferably in the form anatase with the associated benefit of TiO₂ and especially anatase being highly porous and thus active as catalyst supports.

In a further embodiment the porous support comprises SiO₂ preferably being in the form of diatomaceous earth or a highly porous artificial silica with the associated benefit of SiO₂ and especially diatomaceous earth and highly porous artificial silica being highly porous, and thus active as catalyst supports.

In a further embodiment the catalytically active material further comprises a stabilizing constituent, preferably WO₃, with the associated benefit of stabilizing the active crystal structure such as the vanadium/anatase structure thus giving a longer life time of the catalytically active material.

In a further embodiment the catalytically active material comprises from 2 wt% or 3wt% to 5 wt%, 10 wt% or 50wt% WO₃, with the associated benefit of balancing high stabilization with high concentrations and reduced cost when using lower concentrations of WO₃.

In a further embodiment the catalytically active material is in the form of a monolithic catalyst, preferably comprising a structural substrate made from metal, high silicon glass fibres, glass paper, cordierite and silicon carbide and a catalytic layer with the associated benefit of providing a stable and well defined physical shape.

In a further embodiment the monolithic catalyst has a void of from 65 vol% or 70 vol% to 70 vol% or 80 vol%, with the associated benefit of a good balance between the amount of catalytic material and an open monolith with low pressure drop.

In a further embodiment the catalytic layer has a thickness of 10-150µm with the associated benefit of providing a catalytically active material with high pore volume.

In a further embodiment the catalyst further comprises from 0.01 wt%, 0.02wt% or 0.05wt% to 1wt% of a noble metal, preferably Pd or Pt, with the associated benefit of noble metals, and especially Pd and Pt being catalytically active in the oxidation of CO and COS.

A further aspect of the present disclosure relates to a method for the oxidation of a gas comprising one or more species comprising sulfur in an oxidation state below +4, such as H₂S, CS₂, COS and/or S₈ vapor to SO₂ said method comprising the step of contacting the gas and an oxidant with such a catalyst at a temperature between 180°C and 450°C, with the associated benefit of such a method requiring a lower temperature of the feed gas, compared to similar processes with traditional catalysts.

In a further embodiment the oxidant is O₂ and said oxidant is present in at least the stoichiometric amount for oxidation of sulfur containing compounds to SO₂, with the associated benefit of providing substantially all sulfur in an oxidated form convertible to e.g. sulfuric acid by well-known processes.

Vanadium is known as a material catalytically active in oxidation, but it has not been applied at high concentration for the oxidation of sulfur compounds to sulfur dioxide. In the present context the concentration of vanadium oxide in the catalytic material is above 2wt%.

The high activity of catalytically active vanadium requires that vanadium is well distributed on a porous support. This support may according to the present disclosure preferably comprise titania (TiO₂) possibly in combination with silica (SiO₂), and preferably in highly porous forms. For titania, anatase is the preferred form, and silica is preferably provided as diatomaceous earth or artificial high porosity silica.

The structure of vanadium and titania may be stabilized by an appropriate stabilizer. A preferred stabilizer is tungstenate WO₃, but other materials are also known to the skilled person.

To enable the oxidation of carbonyls and carbon monoxide at low temperatures noble metal is required. Preferred noble metals are palladium and platinum. These materials are only required to be present in concentrations between 0.05 wt% and 1 wt%.

To ensure a low pressure drop the catalytically active material may be provided on a monolithic support. As it is known to the person skilled in the art, many variants of monolithic support exist. These are predominantly chosen as inert materials according to their mechanical and production characteristics. Some examples are metal grids, high silicon glass fibres, glass paper, cordierite and silicon carbide.

High silicon content glass may contain 94-95% by weight SiO₂, 4-5% by weight Al₂O₃ and some Na₂O, these fibres have a density of 2000-2200 g/l with a fibre diameter is 8-10 µm. An example is the commercially available SILEX staple fiber.

E-glass (electrical grade glass fibre) may contain 52-56% by weight SiO₂, 12-16% by weight Al₂O₃, 5-10% by weight B₂O₃, 0-1.5 % by weight TiO₂, 0-5% by weight MgO, 16-25% by weight CaO, 0-2% by weight K₂O/Na₂O and 0-0.8% by weight Fe₂O₃.

The catalytic material may be applied on a monolithic substrate, which may have the form of plane or corrugated plates. The monolithic substrate comprises a structural substrate such as sheets of E-glass fibres, sheets of a glass with high silicon content, cordierite or silicon carbide and a porous layer comprising TiO₂ and/or SiO₂. The porous layer may be applied by dipping the structural substrate in an appropriate slurry. Solvents for said slurries may be water or a mixture of organic solvents (alcohols, alifatic or aromatic solvents) depending on the binder solubility. Binders may be soluble in water (e.g. PVA, PEG) or organic solvents (e.g. PVP, resins) and serve as rheology modifiers as well as binders after evaporation of solvents. Alternatively low viscosity slurries may be shaped to catalyst supports by dip-coating of a pre-shaped structure, i.e. a pre-wash-coated structure. Concentrated slurries or pastes may be shaped to catalyst support by extrusion or calendering into metal wire mesh or glass fibre paper.

### Example 1

900 g anatase TiO₂ powder was suspended in 1100 g of a solution of tetra-isopropyl-titanate in butanol containing 4 % by weight of Ti and 4 % by weight of water. This slurry was mixed thoroughly in a laboratory dissolver in order to secure intimate mixture of the constituents and to break down any agglomerate to be smaller than 400 mesh. An Erichsen Grindometer was used to control this. Glass fibre mats having a thickness of approximately 1 mm were cut to dimensions of approximately 18 by 5 cm. These mats were dipped into the above mentioned slurry to obtain a fully wetted fibre mat. After drying, the material was calcined at 600°C for 2 hours.

After calcination, the catalyst support material was impregnated with solutions made from NH₄VO₃ and (NH₄) ₆H₂W₁₂O₄₀ and treated at 400°C in air to give a final catalyst containing 3 wt% V₂O₅ and 3 wt% WO₃, having a void of approximately 75%.

### Example 2

The catalyst produced according to Example 1 was further impregnated with palladium by suspension in a solution of palladium tetra-ammine bicarbonate in nitric acid. The resulting Pd concentration was approximately 0.35 wt%.

### Example 3

The unpromoted catalyst prepared according to Example 1 was tested for the oxidation of hydrogen sulfide, H₂S.

A stream of 380 ppm H₂S, and 2.9% O₂ was directed to contact the unpromoted catalyst at temperatures from 172°C to 212°C in an oven, with a NHSV of 8600 Nm3/h/m³. To simplify the evaluation, the relative amount of H₂S found as SO₂ in the product gas is tabulated.

Table 1 shows the results of these examples, according to which the ignition temperature for oxidation of H₂S to SO₂ was found to be around 180°C.

**Table 1**

| **Temperature [°C]** | **S oxidation to SO₂** |
|---|---|
| 172 | 55% |
| 177 | 82% |
| 182 | 97% |
| 192 | 100% |
| 212 | 100% |

### Example 3

The Pd promoted catalyst produced according to Example 2, was tested for the oxidation of carbon disulfide, CS₂, which produces CO as an intermediate product.

A stream of 904 ppm CS₂, 1769 ppm SO₂, 2.3% H₂O and 17% O₂ was directed to contact the Pd-promoted catalyst at temperatures from 260°C to 320°C in an oven with a NHSV of 8800 Nm3/h/m³.

Under similar conditions the unpromoted catalyst according to Experiment 1 showed a good sulfur oxidation activity, but insufficient carbon monoxide and carbonyl oxidation activity below 400°C.

In Table 2 the experimental results are shown. At 315°C full oxidation of CS₂ to CO₂ and SO₂ occurs. At lower temperatures some indication of deactivation with respect to CO oxidation was observed but this deactivation was reversible.

**Table 2**

| | Promoted catalyst | |
|---|---|---|
| Temperature [°C] | S oxidation to SO₂ | C oxidation to CO₂ |
| 262 | <70% | <65% |
| 291 | <80% | <90% |
| 315 | 100% | 100% |

## Claims

1. A material catalytically active in the oxidation of a species comprising sulfur in an oxidation state below +4 such as H₂S, CS₂, COS and S₈ vapor to SO₂ comprising from 1 to 25 wt% or 50 wt% V₂O₅ and a 10-80wt% of a porous support.

2. A catalytically active material according to claim 1 comprising from 2 wt% or 3 wt% to 4wt%, 5wt% or 10wt% V₂O₅.

3. A catalytically active material according to claim 1 or 2 in which the porous support comprises TiO₂ preferably in the form anatase.

4. A catalytically active material according to claim 1, 2 or 3 in which the porous support comprises SiO₂ preferably being in the form of diatomaceous earth or a highly porous artificial silica.

5. A catalytically active material according to claim 1, 2, 3 or 4 further comprising a stabilizing constituent, preferably WO₃.

6. A catalytically active material according to claim 1, 2, 3, 4 or 5 comprising from 2 wt% or 3wt% to 5 wt%, 10 wt% or 50wt% WO₃.

7. A catalytically active material according to claim 1, 2, 3, 4, 5 or 6 being in the form of a monolithic catalyst, comprising a structural substrate made from metal, high silicon glass fibres, glass paper, cordierite and silicon carbide and a catalytic layer.

8. A monolithic catalyst according to claim 7, wherein the monolithic catalyst has a void from 65 vol% or 70 vol%, to 70 vol% or 80 vol%.

9. A catalyst according to claim 7 or 8, wherein the catalytic layer has a thickness of 10-150µm.

10. A catalyst according to claim 1, 2, 3, 4, 5, 6, 7, 8 or 9, further comprising from 0.01 wt%, 0.02wt% or 0.05wt% to 1wt% of a noble metal, preferably Pd or Pt.

11. A method for the oxidation of a gas comprising one or more species comprising sulfur in an oxidation state below +4, such as H₂S, CS₂, COS and/or S₈ vapor to SO₂ said method comprising the step of contacting the gas and an oxidant with a catalyst according to claim 1, 2, 3, 4, 5, 6, 7, 8, 9, or 10 at a temperature between 180°C and 450°C.

12. A method according to claim 11 in which the oxidant is O₂ and said oxidant is present in at least the stoichiometric amount for oxidation of sulfur containing compounds to SO₂.
